# EUROPEAN PATENT APPLICATION

(11) **EP 4 249 890 A1**
(43) Date of publication of application: **27.09.2023**
(21) Application number: 22164339.8
(22) Date of filing: 25.03.2022
(51) Int. Cl.: G01N 3/08

(54) **TESTING MACHINE WITH COLLECTING DEVICE, COLLECTING DEVICE AND METHOD OF OPERATING THE TESTING MACHINE**

(71) Applicant: Henkel AG & Co. KGaA, 40589 Düsseldorf (DE)
(72) Inventor: Fedrigo, Loris, 40597 Düsseldorf (DE); Altrock, Martin, 40597 Düsseldorf (DE)
(74) Representative: Wagner Albiger & Partner Patentanwälte mbB

(57) **Abstract**

The invention relates to a testing machine (1) for testing a test specimen (30), comprising a lower clamping device (10) and an upper clamping device (20) for receiving the test specimen (30), wherein at least one of the clamping devices (10, 20) is movable in a vertical direction (21). The invention is characterized in that a liquid collecting device (40) is provided, which is arranged under the test specimen (30) when it is in a clamped position, so that liquids from or out of the test specimen (30) can be collected by the collecting device (40). The invention also relates to the collecting device (40) as such and to a method of operating the testing machine (1)

## Description

The invention relates to a testing machine for testing a test specimen, comprising an upper clamping device and a lower clamping device for receiving the test specimen, wherein at least one of the clamping devices is movable in a vertical direction.

Such a testing machine with an upper clamping device and a lower clamping device is well known from the prior art. The test specimen can, for example, be a bar, the upper end of which is clamped in the upper clamping device and the lower end of which is clamped in the lower clamping device. The bar extends with its longitudinal axis in vertical direction. If, for example, the upper clamping device is moved upwards while the lower clamping device is stationary, the bar is subjected to tensile stress. The upper clamping device can be moved upwards until the bar cracks or breaks. The testing machine can thus be used to determine the maximum tensile strength of the bar. If the tensile force acting on the bar is recorded as a function of the deformation path, its elastic behavior can also be determined.

The testing machine described above can also be used to test the tensile shear strength of an adhesive bond. The test specimen can consist of two flat bars that partially overlap in the longitudinal direction with their flat sides and are bonded together in the overlap area by a adhesive layer. When the two bars bonded together are pulled apart in the longitudinal direction by the testing machine, the bonded joint is stressed in shear. Thus, the testing machine can be used to determine the tensile shear strength of the bonded joint.

The tensile shear strength of the bonded joint depends not only on the adhesive used but also on many other factors, such as the test conditions (test temperature, test speed, etc.), the adhesive layer thickness, the material of the bonded bars and any surface treatment of the bars prior to bonding.

Another important influencing variable can be the moisture of the adhesive and the moisture of the bonded bars. If the test specimen is moist or saturated with a liquid, it cannot be excluded that liquid escapes from the test specimen and drips down during clamping of the test specimen or during the actual test. Especially in an automated test procedure, where the test machine and an associated device for feeding and discharging the test specimens are operated for hours or days without human supervision and influence, the dripping liquid can lead to serious problems (for example, contamination, damage to the test machine or risk of injury due to slippery floor).

The invention is therefore based on the object of providing a testing machine that can be used for a wide variety of test specimens and whose automated operation over a long period of time is possible without any problems.

This object is solved by a testing machine according to claim 1. Examples of embodiments of the invention can be taken from the subclaims to claim 1.

According to the invention, it is envisaged that a collecting device for liquids is provided, which is arranged under the test specimen when the latter is in a clamped position, so that liquids from the test specimen or out of the test specimen can be collected by the collecting device. If the test specimen comprises , for example, the two bars already described above, which are glued together in the overlap area and which are soaked with water, there is a risk that water will be pressed out of the two bars when the test specimen is clamped in the upper clamping device and in the lower clamping device. This water can be collected by the collecting device, which is located below the test specimen. The dripping water can thus not cause contamination or damage to the testing machine. Due to the collecting device, a close-meshed inspection of the testing machine by an operator is not necessary, who would wipe away the dripping water from time to time to prevent further contamination or damage. Thus, the testing machine according to the invention opens up the possibility of testing moist or wet test specimens automatically over a longer period of time without the need for cost-intensive intervention or inspection by an operator.

In one embodiment, the collecting device is seated in a recess of a bridge member of the lower clamping device. The collecting device can be flush with an upper edge of the bridge member. This avoids protruding corners or edges of the collecting device, which could injure an operator.

The collecting device can be detachably connected to the lower clamping device. This makes it possible to easily empty or replace the collecting device when it has filled up overtime. The collecting device can alternatively or additionally have a drain line. Through this drain line, the liquids collected by a trough or funnel of the collecting device can be continuously drained. It is also conceivable that the drain line can be opened or closed by a valve. In this case, the collecting device can be emptied at regular intervals without having to remove the collecting device from its operating position.

In one embodiment, the drain line is attached to an end face of the trough. In this case, the drain line can have a first line section and a second line section that enclose an angle, for example an angle of 80 to 100°, preferably 90°. In the operating position of the collecting device, the second line section may be directed vertically downward so that the liquids from the trough can be discharged in a simple manner into a drainage channel or a larger container.

The lower clamping device can have at least one first movable jaw that can be moved in a clamping direction. This clamping direction is preferably horizontal. The lower clamping device can have a second jaw which is opposite the first jaw. If a part of the test specimen is positioned between the first jaw and the second jaw, it can be fixed between the jaws by moving the jaws towards each other and clamping the test specimen between them. The second jaw can be a fixed or a movable jaw.

The above description of the lower clamping device with regard to the first and second jaws also apply mutatis mutandis to the upper clamping device. The upper clamping device can also have a first movable jaw and a second jaw to fix the test specimen in the upper clamping device.

A length of the collecting device may substantially correspond to the spatial extent of the lower clamping device perpendicular to the vertical and perpendicular to the clamping direction. Thus, the collecting device extends over an entire depth (perpendicular to the clamping direction) of the lower clamping device and thus provides a large collecting area for the dripping liquids without protruding from the lower clamping device. In the clamping direction, i.e. transverse to the longitudinal extension of the collecting device, the collecting device or its tray may have a width corresponding to a distance between the first jaw and the second jaw of the lower clamping device when the clamping device is maximally open. In other words, when operating the test machine, the maximum distance between the first jaw and the second jaw can be set to be equal to or less than the width of the collecting device.

The trough may have the shape of a half hollow cylinder, with the open side of the half hollow cylinder facing upward in the operating position of the collecting device. At the end faces, the hollow cylinder may have semi-circular end walls which, in a preferred embodiment, are flat. One of the end walls or both end walls may have an opening for the drain line already described above.

In one embodiment, the collecting device has a transverse strut that serves as a support for the test specimen if it or a part thereof falls through the (not yet closed) lower clamping device when the test specimen is clamped. A vertical distance of the support to an upper edge of the jaws of the lower clamping device can be selected in such a way that the dropped test specimen or the dropped part, as far as it stands upright on the support, protrudes in vertical direction over the upper edge of the jaws. This opens up the possibility of removing the dropped test specimen with a robot arm whose working area includes the space between the upper clamping device and the lower clamping device. In this embodiment, the robotic arm is part of an automated device for feeding the test specimens into the testing machine and for removing the test specimens from the testing machine after the test run has been completed. The transverse strut can also act as a springboard onto which the dropped test specimen impacts and then springs laterally away from the lower fixture. This prevents a dropped test specimen (or part of it) from blocking the lower clamping device and making testing of further test specimens impossible.

The invention also relates to the collecting device as such for a testing machine, as described in its various embodiments above. For example, the collecting device according to the invention may comprise a trough in the form of a half hollow cylinder and a drain line which attaches to an end wall of the hollow cylinder and has a second line section pointing downwards. The collecting device may be made of plastic and/or sheet metal.

The invention further relates to a method for operating the above-described testing machine, wherein the test specimen is clamped in a wet or soaked state between the upper clamping device and the lower clamping device, and wherein during clamping the liquids pressed out of the test specimen or liquids escaping or dripping from the test specimen are collected by the collecting device.

The invention is explained in more detail with reference to the embodiments shown in the figures. It is shown in:
- Figure 1: schematically a testing machine according to the invention with a clamped test specimen;
- Figure 2: a collecting device in a perspective view from below;
- Figure 3: the collecting device of figure 2 in a view from below;
- Figure 4: the collecting device of figure 2 in a side view;
- Figure 5: the test machine of Figure 1 with the test specimen after a test run;
- Figure 6: the test machine of Figure 1 with the test specimen, a part of which has fallen down.

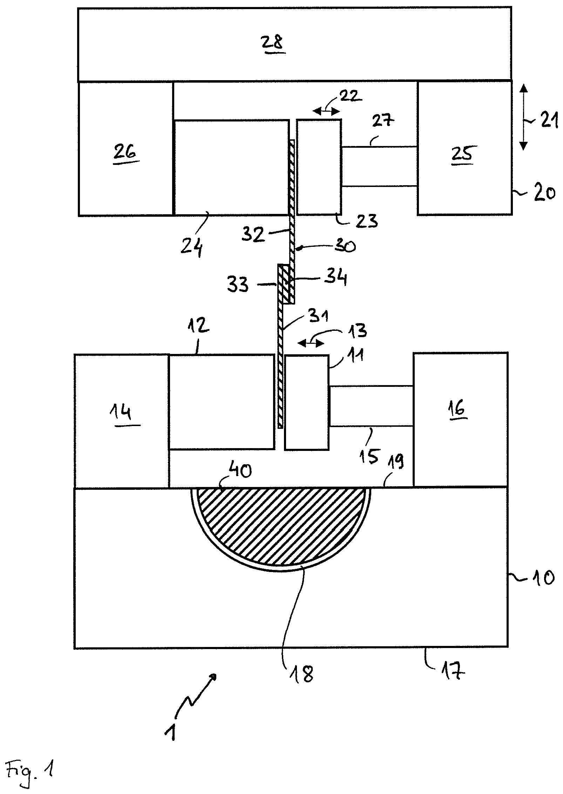

Figure 1 schematically shows a testing machine, designated in its entirety as 1. The testing machine 1 comprises a lower clamping device 10 and an upper clamping device 20. The upper clamping device 20 can be moved up and down in a vertical direction, which is shown by the double arrow 21, relative to the lower clamping device 10. In principle, it is also conceivable that the lower clamping device 10 can be moved in a vertical direction 21 instead of the upper clamping device 20 or in addition to the upper clamping device 20 in order to be able to adjust the vertical distance between the two clamping devices 10, 20.

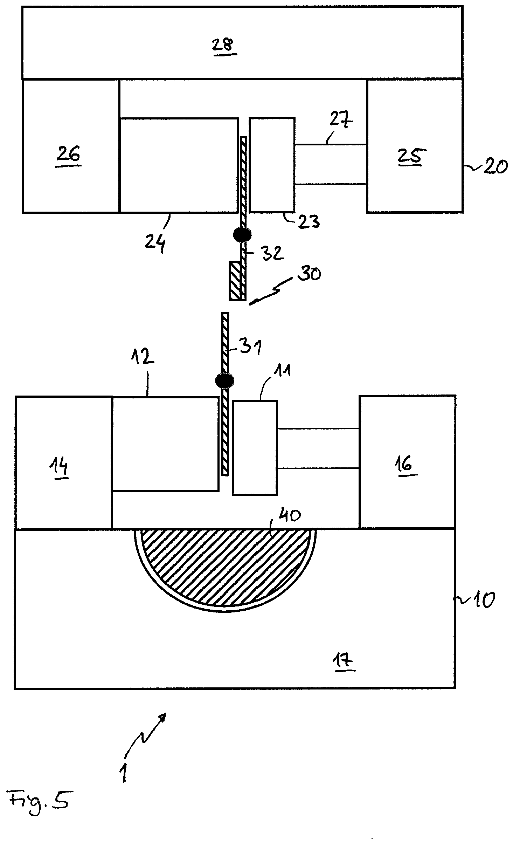

Figure 1 further shows a test specimen 30 clamped in the lower clamping device 10 and in the upper clamping device 20. The test specimen 30 consists of two elongated rectangular bars 31, 32, which are glued together in an overlap area 33 via an adhesive layer 34. When, in the clamped state of the test specimen 30, the upper clamping device moves upwards in the vertical direction 21, the test specimen 30 is subjected to tension and though the adhesive layer 34 or the adhesive bond between the bars 31, 32 is subjected to shear. The force with which the upper clamping device is moved upwards can be increased at a constant test speed (for example 5 mm/s) until the adhesive bond is broken and the two bars 31, 32 are separated from each other. Figure 5 shows the test specimen 30 in such a separated state.

The lower clamping device 10 has a first jaw 11 and a second jaw 12, with a double arrow 13 intended to indicate that the first jaw 11 can be moved back and forth in a horizontal direction or clamping direction perpendicular to the vertical direction 21. The second jaw 12 is intended to be a fixed jaw supported on a jaw support 14. The first movable jaw 11 is connected to a movable piston 15, which is supported on another jaw support 16. The jaw support 16 has a drive, which is not shown further here, by means of which the piston 15 and thus also the first jaw 11 can be moved to the left and right in the representation of Figure 1. A lower end of the bar 31 is positioned between the first jaw 11 and the second jaw 12 and clamped between them when the first jaw 11 presses against the fixed jaw 12 with a certain clamping force.

The jaw supports 14, 16 are connected to each other via a bridge member 17. The bridge member 17 bears the forces acting on the jaw supports 14, 16 when the jaws 11, 12 fix the bar 31. The jaw support 14, the bridge member 17 and the jaw support 16 can in principle also be designed as a U-shaped component whose housing is formed in one piece.

The basic design of the upper clamping device 20 corresponds to that of the lower clamping device 10. The upper clamping device 20 also has a jaw 23 movable in the horizontal direction (see double arrow 22) and a fixed second jaw 24, which are supported on jaw supports 25, 26 in the horizontal direction 22. The first jaw 23 can be moved back and forth via a piston 27. An upper end of the bar 32, which is arranged between the jaws 23, 24, is clamped in the upper clamping device 20 when the first jaw 23 is pressed against the opposite jaw 24 with a certain clamping force. A bridge member 28 connects the jaw supports 25, 26 and bears corresponding horizontal forces.

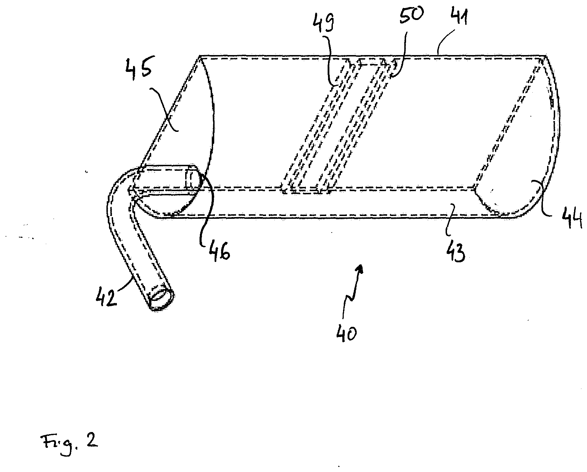

Below the jaws 11, 12 of the lower clamping device 10, a collecting device 40 is provided for receiving liquids originating from or coming from the test specimen 30. For example, the bars 31, 32 may be wooden bars soaked in water (or in another liquid like oil) to test how the adhesive bond behaves under these wet or humid conditions. The pressure of the jaws 11, 12 or jaws 23, 24 can force the water out of the bars 31, 32, which then drips down into the collecting device 40. The collecting device 40 thereby prevents the water pressed out from contaminating the testing machine 1 and possibly causing damage. The structure of an embodiment of the collecting device 40, which is shown in hatching in Figure 1, is described in more detail below with reference to Figures 2 to 4. The collecting device 40 is seated in a semi-circular recess 18 of the bridge member 17, being flush with an upper edge 19 of the bridge member. The collecting device 40 extends with its longitudinal direction perpendicular to the drawing plane of figure 1.

It should be noted that the test specimen shown in Figure 1 is intended to be exemplary for test specimens of a different design whose mechanical characteristic values can be measured with the testing machine 1 (for instance Thick Adherent Shear Test (TAST), T-peel test, 180°-peel). It should also be noted that in Figure 1 the test specimen 30 is shown only schematically, so that the lengths of the bars 31, 32 or of the overlap area 33 as well as of a layer thickness of the adhesive layer in Figure 1 are not to scale.

For example, the bars 31, 32 can each have a length of around 100 mm, and the overlap area 33, measured in the vertical direction 21, can be around 13 mm. A width of the bars 31, 32 (spatial extent of the bars 31, 32 perpendicular to the drawing plane of Figure 1) and thus also a width of the adhesive layer 34 can be around 25 mm.

Figures 2 to 4 show the collecting device 40 in various views. Edges of the collecting device 40 that are obscured in the various views are shown by dashed lines. The collecting device 40 comprises a trough 41 and a drain line 42. The trough 41 has the shape of a half hollow cylinder open to one side. Accordingly, the trough 41 includes a lateral surface or lateral wall 43 which extends over an angular range of 180°. A first end wall 44 and a second end wall 45 are provided at the end faces of the lateral wall 43, each of which is flat and has the shape of a semicircle. An opening 46 is provided in the second end wall 45, through which the liquid that has been collected by the trough 41 can pass into the drain line 42.

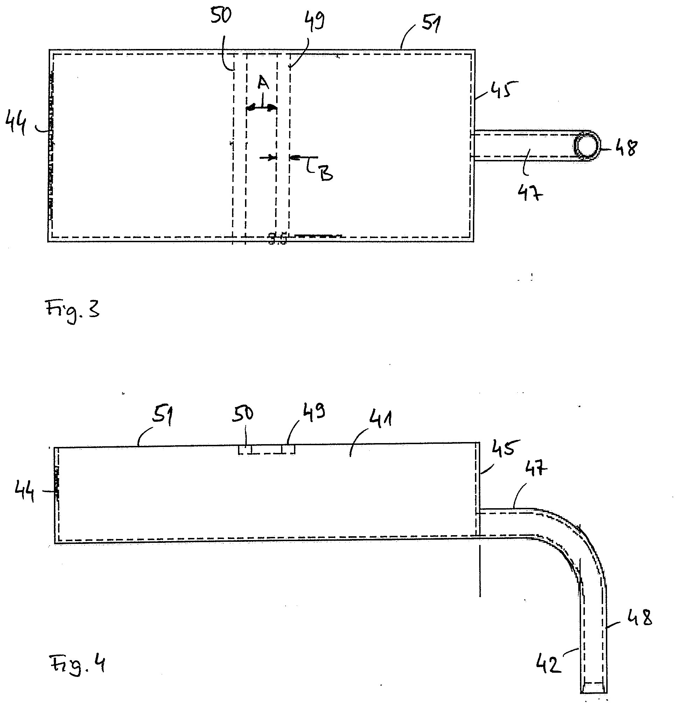

The drain line 42 includes a first line section 47 and a second line section 48 that are at right angles to each other. The first line section 47 attaches perpendicularly to the second end wall 45 and then merges in the second line section 48 via a curved transition. Figure 4 shows the collecting device 40 in operating position, in which the open side of the trough 41 faces upwards and the second line section 48 of the drain line 42 is inclined downwards. A pipe diameter of the drain line is 7 mm in an embodiment.

Between the spaced end walls 44, 45, two transverse struts 49, 50 are provided at an upper circumferential edge 51 of the trough 41, which transverse struts extend parallel to the end walls 44, 45 and bridge the open side of the trough 41. A distance A between the two transverse struts 49, 50 is a few millimeters, for example 6 to 10 mm, preferably 8 mm. The transverse struts may each have a width B of 4 to 8 mm, for example 5 to 6 mm. The length of the transverse struts 49, 50 corresponds (as a good approximation) to a diameter D of the hollow cylindrical trough 41 and may be between 40 to 50 mm. A length of the trough (spacing of the end walls 44, 45) is about 110 mm in an embodiment example. The circumferential edge 51 forms a rectangular edge for the opening of the trough 41. This opening is spanned only by the transverse struts 49, 50. The transverse struts 49, 50 are located in the middle between the end walls 44, 45.

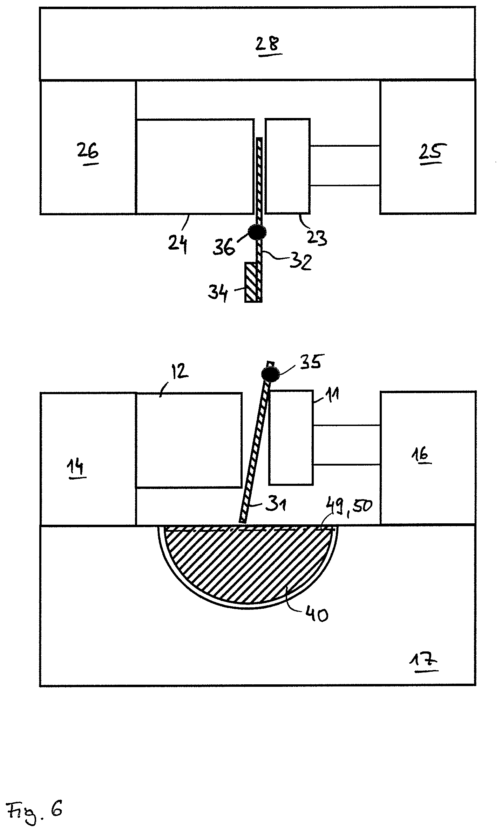

Figures 5 and 6 show different states that can occur during an automated test procedure in the testing machine 1. Figure 5 shows a state after a test has been carried out in which the upper clamping device 20 has been moved so far upwards that the adhesive bond between the bars 31, 32 has been broken. There is also no overlap area between the two bars 31, 32 anymore. Immediately after the test, the bar 31 is still clamped in the lower clamping device 10, while the bar 32 is still held by the upper clamping device 20.

A robot arm (not shown) as part of a device for feeding test specimens into the testing machine 1 and for removing them from the testing machine 1 can grip the bar 32 at a gripping point 36 after the test has been performed (see Figure 5), so that the upper clamping device 20 can be opened. The upper bar 32 is now no longer clamped between the two jaws 23, 24 and can now be deposited in a magazine by the robot arm. The bar 31 of the testing machine 1 can also be removed in the same way. Again, the robot arm is first guided to a gripping point 36 to grip the bar 31. Then the lower clamping device 10 can be opened. The robot arm can finally deposit the bar 31 in the magazine.

Another state that can occur in the testing machine 1 is shown in Figure 6. When a new test specimen 30 is loaded, in which the corresponding bars 31, 32 are still originally connected via the adhesive layer 34, the upper end of the bar 32 is first clamped in the upper clamping device 20. In the process, the case can occur that the bar 31 detaches from the already clamped bar 32 in the process or shortly thereafter, because the adhesive bond between the bars 31, 32 is very fragile. With the lower clamping device 10 still open, the bar 31 then falls down. However, the bar 31 is held up by the transverse struts 49, 50, which are indicated by a dashed line in Figure 6, so that it is held upright between the jaws 11, 12. In this position, however, the dropped bar 31 can be removed from the lower clamping device 10 by the robot arm, since the robot arm can also grip the dropped bar 31 at the gripping point 35 and move it out of the testing machine 1. This reduces the risk of the lower clamping fixture 10 being blocked by dropped parts of the test specimen during automated operation of the testing machine 1, without the possibility of being able to automatically remove this blockage.

### List of reference signs

- 1: test machine
- 10: lower clamping device
- 11: first jaw
- 12: second jaw
- 13: clamping direction / double arrow
- 14: jaw support
- 15: piston
- 16: jaw support
- 17: bridge member
- 18: recess
- 19: top edge
- 20: upper clamping device
- 21: vertical direction / double arrow
- 22: clamping direction / double arrow
- 23: first jaw
- 24: second jaw
- 25: jaw support
- 26: jaw support
- 27: piston
- 28: bridge member
- 30: test specimen
- 31: bar
- 32: bar
- 33: overlap area
- 34: adhesive layer
- 35: grip point
- 36: grip point
- 40: collecting device
- 41: trough
- 42: drain line
- 43: lateral surface
- 44: first end wall
- 45: second end wall
- 46: opening
- 47: first line section
- 48: second line section
- 49: transverse strut
- 50: transverse strut

## Claims

1. Testing machine (1) for testing a test specimen (30), comprising a lower clamping device (10) and an upper clamping device (20) for receiving the test specimen (30), wherein at least one of the clamping devices (10, 20) is movable in a vertical direction (21), **characterized in that** a collecting device (40) for liquids is provided, which is arranged below the test specimen (30) when it is in a clamped position, so that liquids from or out of the test specimen (30) can be collected by the collecting device (40).

2. Test machine (1) according to claim 1, **characterized in that** the collecting device (40) is arranged in a recess (18) of a bridge member (17) of the lower clamping device (10).

3. Test machine (1) according to claim 2, **characterized in that** the collecting device (40) is flush with an upper edge (19) of the bridge member (17).

4. Testing machine (1) according to any one of claims 1 to 3, **characterized in that** the collecting device (40) is detachably connected to the lower clamping device (10).

5. testing machine (1) according to any one of claims 1 to 4, **characterized in that** the collecting device (40) comprises a trough (41) and a drain line (42), which preferably attaches to a front side of the trough (41).

6. Test machine (1) according to any one of claims 1 to 5, **characterized in that** the lower clamping device (10) has at least one first movable jaw (11) which can be moved in a clamping direction (13).

7. Test machine (1) according to claim 6, **characterized in that** a length of the collecting device (40) substantially corresponds to the spatial extension of the lower clamping device (10) perpendicular to the vertical direction (21) and perpendicular to the clamping direction (13, 22).

8. Test machine (1) according to claim 5, **characterized in that** the trough (41) has the shape of a half hollow cylinder.

9. Test machine (1) according to any one of claims 1 to 8, **characterized in that** the collecting device (40) has at least one transverse strut (49, 50) which serves as a support for the test specimen (30) if the latter or a part of the test specimen (30) falls through the lower clamping device (10) during clamping of the test specimen (30).

10. Collecting device (40) for a testing machine (1) according to any one of claims 1 to 9.

11. Method for operating the testing machine (1) according to any one of claims 1 to 9, wherein the test specimen (30) is clamped in a wet or soaked state between the upper clamping device (20) and the lower clamping device (10), wherein liquids pressed out of the test specimen (30) or liquids escaping or dripping from the test specimen (30) during clamping or testing are collected by the collecting device (40).
